# EUROPEAN PATENT APPLICATION

(11) **EP 4 769 158 A1**
(43) Date of publication of application: **01.07.2026**
(21) Application number: 25227664.7
(22) Date of filing: 30.12.2025
(51) Int. Cl.: G06F 12/0817, G06F 12/0862, G06F 12/0879, G06F 12/126, G06F 12/0886

(54) **METHOD FOR PROCESSING MEMORY COMMANDS IN COMPUTING SYSTEM**

(30) Priority: 27.12.2024 US 202463739159 P; 23.12.2025 US 202519430299
(71) Applicant: MediaTek Inc., Hsinchu City 30078 (TW)
(72) Inventor: WANG, Yu-Wei, 30078 Hsinchu City (TW); WANG, Po-Han, 30078 Hsinchu City (TW); LIAO, Teng-Feng, 30078 Hsinchu City (TW); LIN, Ke-Jen, 30078 Hsinchu City (TW)
(74) Representative: Haseltine Lake Kempner LLP

(57) **Abstract**

A method for processing memory commands in a computing system (100) comprises: transmitting, from a coherence hub (110) to a downstream cache subsystem (130), a plurality of sub-commands, each of the sub-commands corresponding to a cache line size; receiving, at the downstream cache subsystem (130), at least one of the plurality of sub-commands; in response to receiving the at least one sub-command, determining, by the downstream cache subsystem (130), a full address range of the data block; and performing, by the downstream cache subsystem (130), an optimized memory operation directed to a downstream memory subsystem (140).

## Description

### Field of the Invention

The present invention relates generally to computing system architectures, and more specifically to methods and systems for improving memory access efficiency in a cache-coherent system.

### Background of the Invention

In modem System-on-a-Chip (SoC) architectures, multiple processing units, such as central processing unit (CPU), graphics processing unit (GPU), neural processing unit (NPU) and media processing unit (MPU) often share a common main memory, such as a dynamic random-access memory (DRAM). To ensure data integrity across the system, a cache coherence mechanism is typically employed. This is managed by a hardware system, such as a coherence infrastructure.

A fundamental operation of the coherence infrastructure is to maintain consistency with the CPU cache. The CPU cache is managed in fixed-size blocks known as cache lines, which are commonly 64 bytes in size. Consequently, when a request initiator (e.g., GPU, NPU or MPU) requests a large block of data (i.e., a "long-burst" access greater than 64 bytes), the coherence infrastructure must split the original long-burst command into multiple smaller sub-commands, each aligned to a 64-byte boundary. This splitting is necessary for the coherence infrastructure to perform coherency checks on a per-cache-line basis, verifying whether the data for each 64-byte segment resides in the CPU cache.

However, this process introduces significant challenges to system performance. After an original memory access command being split and processed by a coherence hub, corresponding sub-commands are subject to internal processing logic, such as state machines and bus arbitration. As a result, the sub-commands often become out-of-order, and their original sequential relationship is lost. It cannot be guaranteed which sub-command will exit the coherence hub first. A downstream memory controller therefore receives these 64-byte sub-commands as a series of small and unrelated requests.

This loss of context prevents the memory controller from reconstructing the original long-burst memory access. Being unable to recognize the original access intent, the memory controller cannot perform an efficient, contiguous long-burst access to the memory. Instead, it must issue multiple separate accesses, which degrades memory efficiency and fails to take advantage of data locality.

Accordingly, there is a need in the art for a mechanism to overcome the inefficiencies caused by command splitting in a coherence infrastructure, thereby improving performance of system memory for long-burst accesses.

### Summary of the Invention

With this in mind, it is one object of the present invention to provide a method and system for processing memory commands that overcomes the aforementioned drawbacks of the prior art by preserving the context of an original memory access intent across a coherence infrastructure, thereby enabling efficient long-burst memory operations. Specifically, embodiments of the present invention rely on a sequential hint to indicative of a size a data block regarding an original long-burst memory access command. The sequential hint will be attached to each of sub-commands split from the original memory access command, enabling a downstream cache subsystem to perform an optimized memory operation. In some embodiments, the optimized memory operation may comprise a read-prefetch operation, wherein the downstream cache subsystem proactively reads the full address range of the data block from a system memory. In some embodiments, the optimized memory operation may comprise a write-merging operation, wherein the downstream cache subsystem accumulates data from multiple write sub-commands and performs a single write operation for the accumulated data to the system memory.

This is achieved by a method for processing memory commands in a computing system according to claim 1, and a computing system according to claim 2. The dependent claims pertain to corresponding further developments and improvements.

As will be seen more clearly from the detailed description following below, a method for processing memory commands in a computing system is provided. The method comprises: transmitting, from a coherence hub to a downstream cache subsystem, a plurality of sub-commands, each of the plurality of sub-commands corresponding to a cache line size; receiving, at the downstream cache subsystem, at least one of the plurality of sub-commands; in response to receiving the at least one sub-command, determining, by the downstream cache subsystem, a full address range of the data block; and performing, by the downstream cache subsystem, an optimized memory operation directed to a downstream memory subsystem.

As will be seen more clearly from the detailed description following below, a computing system is provided. The computing system comprises: a coherence hub and a downstream cache subsystem. The coherence hub is configured to transmit a plurality of sub-commands, each of the plurality of sub-commands corresponding to a cache line size. The downstream cache subsystem is configured to receive at least one of the plurality of sub-commands and in response to receiving the at least one sub-command, determine a full address range of the data block; and perform an optimized memory operation directed to a downstream memory subsystem.

### Brief Description of the Drawings

FIG. 1 illustrates a block diagram of a computing system according to one embodiment of the present invention.
FIG. 2 illustrates a memory access command handling process according to one embodiment of the present invention.
FIG. 3 illustrates a memory access command handling process according to another embodiment of the present invention.
FIG. 4 is a table illustrating an exemplary encoding scheme for sequential hint bits according to one embodiment of the present invention.
FIG. 5 illustrates a process flow regarding end-to-end data path for a memory access command being processed by a coherence hub and a downstream cache subsystem, in accordance with one embodiment of the present invention.
FIG. 6 illustrates a sequence diagram detailing an exemplary write-merging operation in accordance with one embodiment of the present invention.
FIG. 7 illustrates a sequence diagram detailing an exemplary read-prefetch operation in accordance with one embodiment of the present invention.
FIG. 8 illustrates a sequence diagram detailing an exemplary read-prefetch operation in a scenario with partial snoop hits, in accordance with one embodiment of the present invention.
FIG. 9 illustrates a flow chart of a method processing memory commands in a computing system according to one embodiment of the present invention.

### Detailed Description

In the following description, numerous specific details are set forth in order to provide a thorough understanding of the present embodiments. It will be apparent, however, to one having ordinary skill in the art that the specific detail need not be employed to practice the present embodiments. In other instances, well-known materials or methods have not been described in detail in order to avoid obscuring the present embodiments.

Reference throughout this specification to "one embodiment" or "an embodiment" means that a particular feature, structure or characteristic described in connection with the embodiment or example is included in at least one embodiment of the present embodiments. Thus, appearances of the phrases "in one embodiment" or "in an embodiment" in various places throughout this specification are not necessarily all referring to the same embodiment. Furthermore, the particular features, structures or characteristics may be combined in any suitable combinations and/or sub-combinations in one or more embodiments.

In the following detailed description, terms such as "upstream cache subsystem," "downstream cache subsystem," and "system memory subsystem" are used to denote components based on their relative positions within a memory hierarchy. While specific examples in the specification may associate these terms with a "CPU cache," a "system-level cache (SLC)," and a "main memory" respectively, it is to be understood that this is for illustrative purposes only and is not intended to be limiting. As the adjectives "upstream" and "downstream" imply, these terms describe a relative relationship. "upstream" generally refers to a hierarchical level closer to the CPU, while "downstream" refers to a hierarchical level further from the CPU and closer to the final data repository. Accordingly, one of ordinary skill in the art will appreciate that the upstream cache subsystem, downstream cache subsystem, and system memory subsystem may correspond to different types or levels of cache and memory in various alternative architectures.

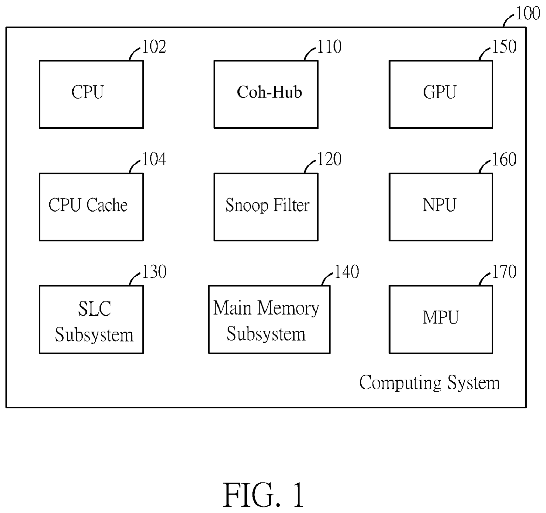

FIG. 1 illustrates a block diagram of a computing system exemplifying an architectural environment according to one embodiment of the present invention. As illustrated, a computing system may comprise a central processing unit 102 (CPU), a CPU cache 104 (which may serve as an upstream cache subsystem), a coherence hub 110, a snoop filter 120, a system-level cache (SLC) subsystem 130 (which may serve as a downstream cache subsystem (i.e., DCS)), a main memory subsystem 140 (which may serve as a system memory and a downstream memory subsystem (i.e., DMS)), a graphics processing unit (GPU), a neural processing unit 160 and a media processing unit 170.

The coherence hub 110 plays a role for orchestrating data flow between a plurality of request initiators and a hierarchical memory system formed by the CPU cache 104, the SLC subsystem 130 and the main memory subsystem 140. The request initiators are diverse processing units, each with distinct workload characteristics. They include the GPU 150, the NPU 160, and the MPU 170.

The CPU 102, serving as the general-purpose compute engine for the system, executing operating system tasks and various applications. It is tightly coupled with the CPU cache 104 within the hierarchical memory system, which must be kept coherent with the rest of the computing system 100.

The GPU 150 is a specialized processor designed to accelerate graphics rendering and parallel computations. The NPU 160 is a specialized processor designed to be hardware accelerator for artificial intelligence (AI) and machine learning (ML) workloads. The MPU 170 is a specialized processor designed to handle media-related tasks, such as video encoding/decoding, image processing, and audio processing.

All of these request initiators share access to the hierarchical memory system. This shared access necessitates a coherence infrastructure to resolve data consistency issues that arise when multiple processors read from and write to the same memory locations. In this architecture, the coherence infrastructure relies on the coherence hub 110, which is configured to facilitate communication among the request initiators and the memory hierarchy. The coherence hub 110 coordinates all data transfers and maintains data coherency across the disparate components.

To optimize the coherency, the coherence hub 110 is coupled with a snoop filter 120. The snoop filter 120 can be cache that tracks the state of cache lines in the CPU cache 104. Its primary function is to mitigate the high performance cost of broadcasting snoop probes to the CPU cache 104 for every memory access command from the GPU 150, the NPU 160 and MPU 170. By first checking the snoop filter 120, the coherence hub 110 can bypass the expensive upstream snoop operation entirely upon a "snoop miss," which indicates that the requested data is definitively not present in the CPU cache 104.

It is to be understood that the CPU cache 104 is illustrated as a single block in FIG. 1 for simplicity, but this is not limited to a monolithic cache. In various embodiments, the CPU cache 104 can represent a multi-level cache hierarchy associated with the CPU 102. This cache hierarchy may comprise, for example: private L1 and L2 caches dedicated to each individual core within the CPU 102, and a shared Last-Level Cache (L3 cache) that is accessible by all cores within the CPU 102.

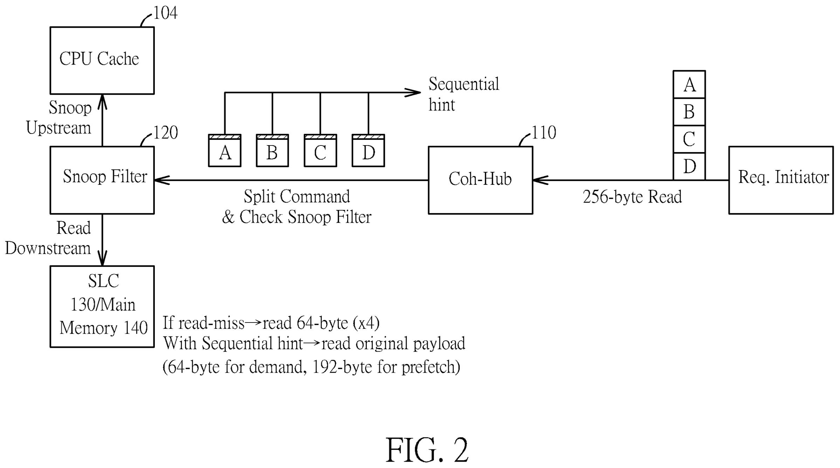

FIG. 2 illustrates a memory access command handling process according to one embodiment of the present invention. In this embodiment, a long-burst 256-byte read command is processed and split by the coherence hub 110.

As illustrated, a request initiator (which may be one of the GPU 150, the NPU 160 and the MPU 170) firstly issues a single 256-byte read command to the coherence hub 110 requesting a 256-byte data block. Once the coherence hub 110 receives the 256-byte read command, it performs a split operation upon the 256-byte read command and coherence checks against the snoop filter 120. Specifically, the coherence hub 110 is responsible for decomposing the 256-byte read command into 4 64-byte read sub-commands (labeled A, B, C, D) to align with a cache line size corresponding to the CPU cache 104. The coherence hub 110 then performs a coherency check for each of the read sub-commands against the snoop filter 120. During this process, the coherence hub 110 further generates and attaches a sequential hint to each of 64-byte read sub-commands A, B, C and D by adding sequential hint bits to specific fields of the 64-byte read sub-commands A, B, C and D.

Based on coherence check responses returned by the snoop filter 120, the coherence hub 110 may then perform a read operation to access an upstream cache subsystem (e.g., CPU cache 104) in response to a snoop hit occurs. Alternatively, in response to a snoop miss, the coherence hub 110 may issue one or more of the 64-byte read sub-commands to a downstream cache subsystem (e.g., the SLC cache subsystem 130) or a downstream memory subsystem (e.g., the main memory subsystem 140) for the data requested by the 256-byte read command.

If a read miss occurs in the downstream, with the sequential hint, the downstream cache subsystem would perform a single optimized read operation based on the original payload, for instance, a 64-byte data read for the demanded data (requested by a single sub-command) and a 192-byte data prefetching (hinted by the sequential hint) for the remainder of the 256-byte data block.

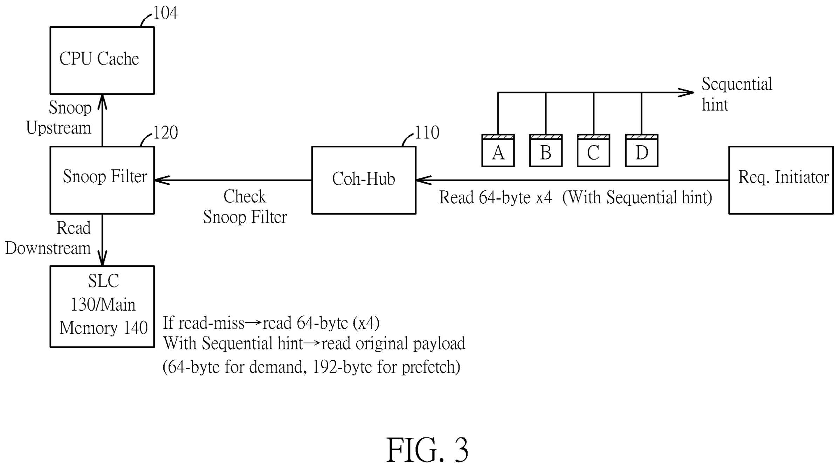

FIG. 3 illustrates a memory access command handling process according to another embodiment of the present invention. In this embodiment, a plurality of smaller commands are generated directly by the request initiator.

In this embodiment, the request initiator (which may be one of the GPU 150, the NPU 160 and the MPU 170) directly generates four separate 64-byte read sub-commands for on a 256-byte data block intent. Specifically, the request initiator itself generates and attaches the sequential hint to each of four 64-byte read sub-commands before issuing four separate 64-byte read sub-commands to the coherence hub 110. In this embodiment, the coherency-related splitting is done at the initiator level.

Once the coherence hub 110 receives the four pre-split 64-byte read sub-commands, each carrying the sequential hint, the coherence hub 110 does not need to perform a splitting operation and only need to perform coherency checks against the snoop filter 120 for each of the four 64-byte read sub-commands.

Based on coherence check responses returned by the snoop filter 120, the coherence hub 110 may then perform a read operation to access an upstream cache subsystem (e.g., CPU cache 140) in response to a snoop hit occurs. Alternatively, in response to a snoop miss, the coherence hub 110 may issue one or more of the 64-byte read sub-commands to a downstream cache subsystem (e.g., the SLC cache subsystem 130) or a downstream memory subsystem (e.g., the main memory subsystem 140) for the data requested by the 256-byte read command.

If a read miss occurs in the downstream, with the sequential hint, the downstream cache subsystem would perform a single, optimized read operation based on the original payload, for instance, a 64-byte data read for the demanded data (requested by a single sub-command) and a 192-byte data prefetching (hinted by the sequential hint) for the remainder of the 256-byte data block.

The primary distinction between these two embodiments shown in FIG. 2 and FIG. 3 lies in which component is responsible for decomposing a large memory access intent into cache-line-sized sub-commands and generating the sequential hint. In summary, both figures illustrate the same result: a plurality of 64-byte sub-commands, each carrying a sequential hint, being transmitted downstream to enable an optimized memory operation.

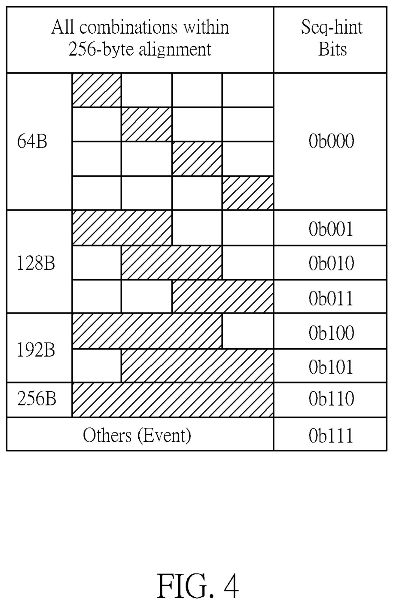

FIG. 4 is a table illustrating an exemplary encoding scheme for a sequential hint according to one embodiment of the present invention. In this embodiment, a 3-bit value is used to represent various combinations of write/read commands within a 256-byte aligned data block. The 256-byte aligned data block is conceptually divided into four 64-byte chunks. The sequential hint bits precisely define the size and relative position of an original memory access command with respect 256-byte aligned data block.

For an original memory access command being a 64-byte read/write command, regardless of its relative position within the 256-byte aligned data block, bits of the sequential hint are assigned as 0b000.

For an original memory access command being a 128-byte read/write command, if it covers the first and second chunks within 256-byte aligned data block, bits of the sequential hint are assigned as 0b001. If the 128-byte read/write command covers the second and third chunks, bits of the sequential hint are assigned as 0b010. If the 128-byte read/write command covers the third and fourth chunks, bits of the sequential hint are assigned as 0b011.

For an original memory access command being a 192-byte read/write command, if it covers the first, second and third chunks within 256-byte aligned data block, bits of the sequential hint are assigned as 0b100. On the other hand, if the 192-byte read/write command covers the second, third and fourth chunks, bits of the sequential hint are assigned as 0b101.

For an original memory access command being a 256-byte read/write command, bits of the sequential hint are assigned as 0b110. Moreover, the sequential hint bits of 0b111 are reserved to indicate an error event or other undefined conditions.

This encoding scheme enables the coherence hub 110 or the request initiator to efficiently communicate the context of an original long-burst memory access command to the downstream cache subsystem or the downstream memory subsystem using a minimal number of bits. The downstream cache subsystem or the downstream memory subsystem, upon receiving a sub-command with sequential hint, it can accurately reconstruct the size and position of the original memory access command within its 256-byte aligned data block.

Please note that the above-mentioned encoding scheme is just for illustrative purposes only. According to various embodiments of the present invention, the sequential hint may be represented as fewer or more bits. In addition, in some embodiments, the encoding scheme for the sequential hint may be not on a 256-byte aligned basis.

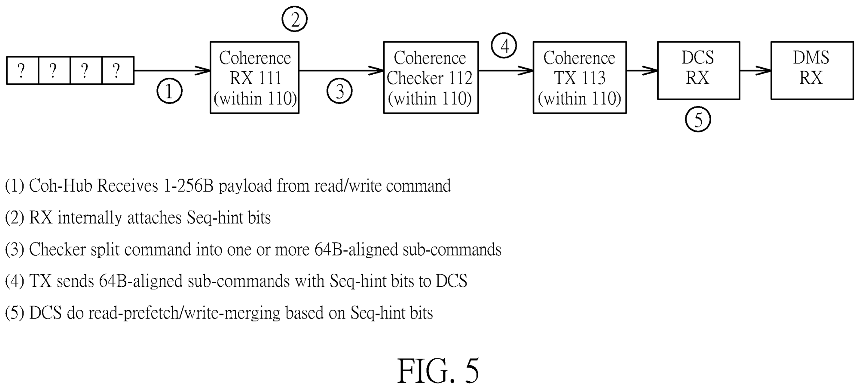

FIG. 5 illustrates a process flow regarding end-to-end data path for a memory access command being processed by the coherence hub 110 and the downstream cache subsystem, in accordance with one embodiment of the present invention. This diagram details the internal stages within the coherence hub 110.

At first, when a receiver block (i.e., Coherence RX 111) within the coherence hub 110 receives a memory access command, which can be a read or write command with a payload size ranging from 1 to 256 bytes. The receiver block internally generates a corresponding sequential hint (i.e., Seq-hint) bits to the received memory access command based on specific encoding scheme. A coherence checker block (i.e., Coherence Checker 112) splits the received memory access command into one or more 64-byte aligned sub-commands to facilitate coherency checks. Also, the generated sequential hint will be attached to each of the 64-byte aligned sub-commands.

After the coherency checks, a transmitter block (i.e., Coherence TX 113) of the coherence hub 110 sends the resulting sub-commands, each carrying the sequential hint bits, to a receiver block (i.e., DCS RX) of the downstream cache subsystem.

Upon receipt of the received sub-commands carrying the sequential hint bits, the downstream cache subsystem, based on the attached sequential hint bits, performs an optimized memory operation, such as a read-prefetch operation or a write-merging operation.

This flowchart provides a clear overview of the inventive process, showing how a memory access command flows through the internal stages of the coherence hub, where it is attached with sequential hint bits and split into sub-commands, ultimately enabling the downstream cache subsystem to perform an optimized memory operation.

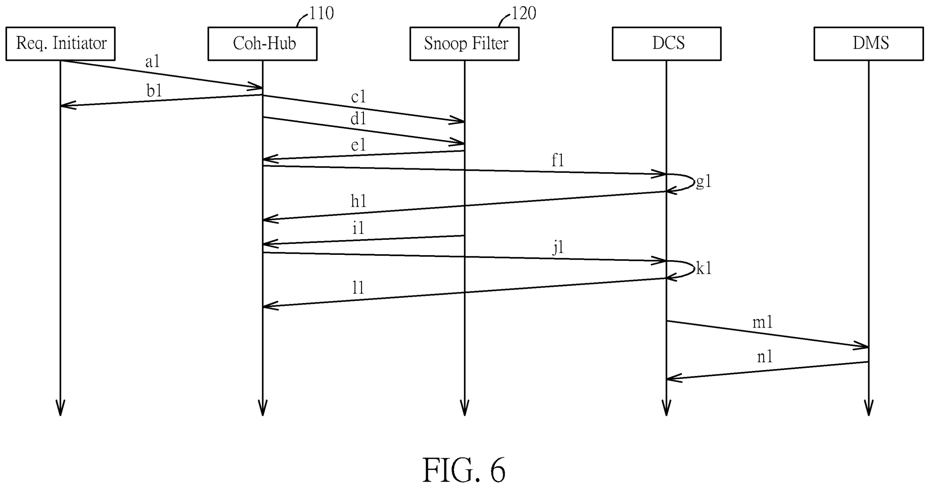

FIG. 6 illustrates a sequence diagram detailing an exemplary write-merging operation in accordance with one embodiment of the present invention. This embodiment shows a scenario where a long-burst write command results in snoop misses for all its sub-commands.

At first, a request initiator of the computing system 100 issues a write command having non-allocation attribute (e.g., a "Write-Allocate" command) for a 128-byte data write, targeting address 0x00-0x7F to the coherence hub 110 (operation a1). Upon reception of the 128-byte write command from the request initiator, the coherence hub 110 returns a write acknowledgement response to the request initiator (operation b1). In order to perform coherency checks, the coherence hub 110 splits the 128-byte write command into two 64-byte write sub-commands. The coherence hub 110 initiates a first coherency check for the first 64-byte write sub-command, corresponding to addresses 0x00-0x3F against the snoop filter 120 (operation c1) and a second coherency check for the second 64-byte write sub-command, corresponding to addresses 0x40-0x7F against the snoop filter 120 (operation d1).

The snoop filter 120 then returns a snoop-miss response corresponding to addresses 0x00-0x3F to the coherence hub 110, indicating that the data corresponding to addresses 0x00-0x3F is not present in an upstream cache subsystem (operation e1). In response to the snoop-miss response corresponding to addresses 0x00-0x3F, the coherence hub 110 issues the first 64-byte write sub-command with non-allocation attribute (for addresses 0x00-0x3F), carrying a sequential hint, to a downstream cache subsystem (i.e., DCS) (operation f1).

The downstream cache subsystem receives the first 64-byte write sub-command. Based on the sequential hint, the downstream cache subsystem understands that payload data in the first 64-byte write sub-command is part of a long-burst write operation. To enable merging, the downstream cache subsystem ignores the non-allocation attribute and performs a force-allocation operation, caching the payload data of the first 64-byte write sub-command for a later write-merging operation (operation g1). Then, the downstream cache subsystem returns a write acknowledgment response corresponding to addresses 0x00-0x3F to the coherence hub 110 (operation h1).

Subsequently, the snoop filter 120 returns a snoop-miss response corresponding to addresses 0x40-0x7F to the coherence hub 110, indicating that the data corresponding to addresses 0x40-0x7F is not present in the upstream cache subsystem (operation i1). In response to the snoop-miss response corresponding to addresses 0x40-0x7F, the coherence hub 110 issues the second 64-byte write sub-command with non-allocation attribute (for addresses 0x40-0x7F), carrying the sequential hint, to the downstream cache subsystem (operation j1).

The downstream cache subsystem receives the second 64-byte write sub-command. Based on the sequential hint, the downstream cache subsystem understands that payload data in the second 64-byte write sub-command is another part of the foregoing long-burst write operation. To enable merging, the downstream cache subsystem ignores the non-allocation attribute and performs a force-allocation operation, caching the payload data in the second 64-byte write sub-command for the later write-merging operation (operation k1). Then, the downstream cache subsystem returns a write acknowledgment response corresponding to addresses 0x40-0x7F to the coherence hub 110 (operation 11).

After a period of time, during which the downstream cache subsystem has accumulated the payload data for both first and second 64-byte write sub-commands, the downstream cache subsystem performs an optimized memory operation (i.e., the write-merging operation). It initiates a single 128-byte write command to a downstream memory subsystem (i.e., DMS), writing the accumulated data to addresses 0x00-0x7F through a single long-burst access (operation m1). Finally, the downstream memory subsystem, after completing the 128-byte write command, returns a final write acknowledgement response corresponding to addresses 0x00-0x7F to the downstream cache subsystem (operation n1).

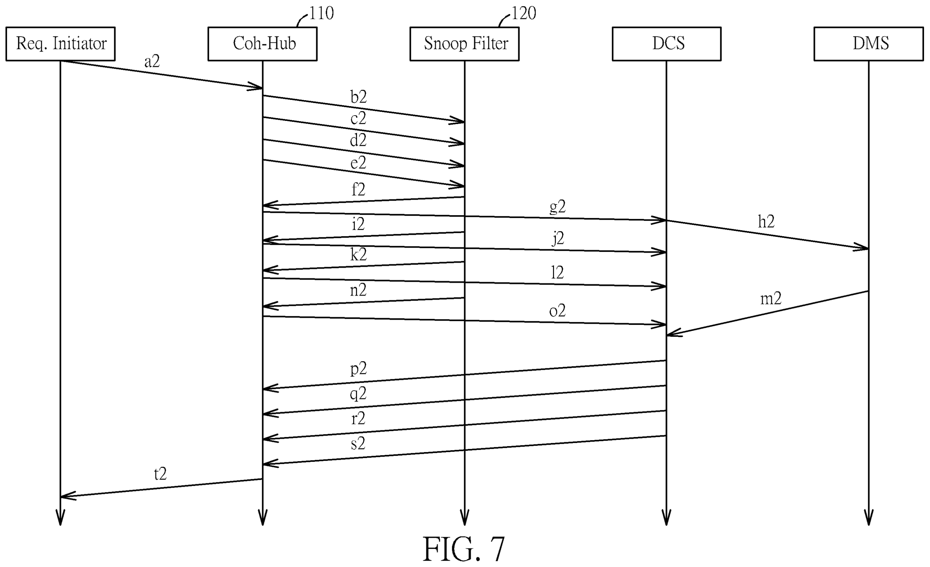

FIG. 7 illustrates a sequence diagram detailing an exemplary read-prefetch operation in accordance with one embodiment of the present invention. This embodiment shows a scenario where a long-burst read command results in snoop misses for all its sub-commands.

At first, a request initiator of the computing system 100 issues a read command requesting a 256-byte data block, targeting addresses 0x00-0xFF to the coherence hub 110 (operation a2). Upon reception of the 256-byte read command from the request initiator, the coherence hub 110 would perform coherency checks, and split the 256-byte read command into four 64-byte read sub-commands. Specifically, the coherence hub 110 initiates a first coherency check for the first 64-byte read sub-command, corresponding to addresses 0x00-0x3F against the snoop filter 120 (operation b2), a second coherency check for the second 64-byte read sub-command, corresponding to addresses 0x40-0x7F against the snoop filter 120 (operation c2), a third coherency check for the third 64-byte read sub-command, corresponding to addresses 0x80-0xBF against the snoop filter 120 (operation d2) and a fourth coherency check for the fourth 64-byte read sub-command, corresponding to addresses 0xC0-0xFF against the snoop filter 120 (operation e2).

Due to out-of-order characteristics caused by state machine or bus arbitration, the snoop filter 120 first returns a snoop-miss response corresponding to addresses 0xC0-0xFF to the coherence hub 110, indicating that the data corresponding to addresses 0xC0-0xFF is not present in an upstream cache subsystem (operation f2). In response to the snoop-miss response corresponding to addresses 0xC0-0xFF, the coherence hub 110 issues the fourth 64-byte read sub-command for addresses 0xC0-0xFF, carrying a sequential hint, to the downstream cache subsystem (operation g2).

The downstream cache subsystem receives the fourth 64-byte read sub-command. Based on carried sequential hint, the downstream cache subsystem understands that the original request from the request initiator was for a 256-byte data block. Accordingly, the downstream cache subsystem immediately performs an optimized memory operation (e.g., a read-prefetch/read-refill operation), targeting addresses 0x00-0xFF by issuing a 256-byte read command for addresses 0x00-0xFF to the downstream memory subsystem (operation h2). This read-prefetch/read-refill operation is initiated by the downstream cache subsystem proactively, without waiting for the other three 64-byte read sub-commands to be received. Subsequently, the downstream memory system services the 256-byte read command and returns the entire 256-byte data block to the downstream cache subsystem (operation m2).

In the meantime, since the read-refill/read-prefetch operation is transparent to the snoop filter 120, the snoop filter would sequentially return snoop-miss responses corresponding to addresses 0x80-0xBF, addresses 0x40-0x7F and addresses 0x00-0x3F to the coherence hub 110, indicating that the data corresponding to above addresses is not present in the upstream cache subsystem (operation i2, k2, n2). In response to the snoop-miss responses corresponding to addresses 0x80-0xBF, addresses 0x40-0x7F and addresses 0x00-0x3F, the coherence hub 110 would sequentially issue the third, second and first 64-byte read sub-commands for addresses 0x80-0xBF, addresses 0x40-0x7F and addresses 0x00-0x3F, each carrying the sequential hint, to the downstream cache subsystem (operation j2, 12, o2).

As the downstream cache subsystem receives the 256-byte read data (64-byte on demand and 192-byte on prefetch) from the downstream memory subsystem, it can begin to service the individual 64-byte read sub-commands that are received from the coherence hub 110. That is, the downstream cache subsystem returns the data to the coherence hub 110 in 64-byte chunk, in a sequence of data corresponding to addresses 0xC0-0xFF, data corresponding to addresses 0xC0-0xFF (operation p2), data corresponding to addresses 0x80-0xBF (operation q2), data corresponding to addresses 0x40-0x7F (operation r2), and data corresponding to addresses 0x00-0x3F (operation s2). This sequence corresponds to an order of 64-byte read sub-commands sent by the coherence hub 110.

Finally, the coherence hub, having collected all the requested data, returns the entire 256-byte data block corresponding to addresses 0x00-0xFF to the request initiator, completing the process (operation t2).

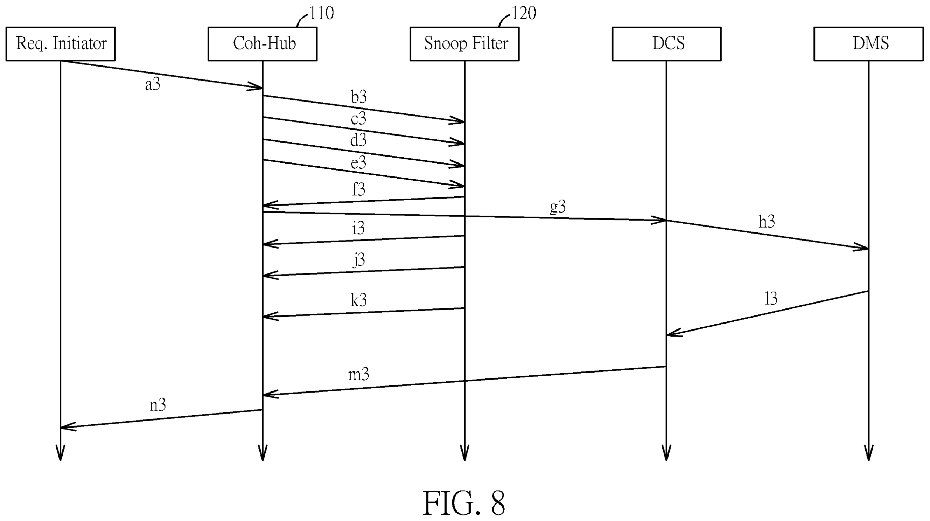

FIG. 8 illustrates a sequence diagram detailing an exemplary read-prefetch operation in a scenario with partial snoop hits, in accordance with one embodiment of the present invention.

At first, a request initiator the computing system 100 issues a read command requesting a 256-byte data block, targeting addresses 0x00-0xFF to the coherence hub 110 (operation a3). Upon reception of the 256-byte read command from the request initiator, the coherence hub 110 would perform coherency checks, and split the 256-byte read command into four 64-byte read sub-commands. Specifically, the coherence hub 110 initiates a first coherency check for the first 64-byte read sub-command, corresponding to addresses 0x00-0x3F against the snoop filter 120 (operation b3), a second coherency check for the second 64-byte read sub-command, corresponding to addresses 0x40-0x7F against the snoop filter 120 (operation c3), a third coherency check for the third 64-byte read sub-command, corresponding to addresses 0x80-0xBF against the snoop filter 120 (operation d3) and a fourth coherency check for the fourth 64-byte read sub-command, corresponding to addresses 0xC0-0xFF against the snoop filter 120 (operation e3).

Due to out-of-order characteristics caused by state machine or bus arbitration, the snoop filter 120 first returns a snoop-miss response corresponding to addresses 0xC0-0xFF to the coherence hub 110, indicating that the data corresponding to addresses 0xC0-0xFF is not present in an upstream cache subsystem (operation f3). In response to the snoop-miss response, the coherence hub 110 issues the fourth 64-byte read sub-command for addresses 0xC0-0xFF, carrying a sequential hint, to the downstream cache subsystem (operation g3).

The downstream cache subsystem receives the fourth 64-byte read sub-command. Based on carried sequential hint, the downstream cache subsystem understands that the original memory access command from the request initiator was for a 256-byte data block. Accordingly, the downstream cache subsystem immediately performs an optimized memory operation (e.g., a read-prefetch/read-refill operation), targeting addresses 0x00-0xFF by issuing a 256-byte read command for addresses 0x00-0xFF to the downstream memory subsystem (operation h3). Subsequently, the downstream memory system services the 256-byte read command and returns the entire 256-byte data block to the downstream cache subsystem (operation 13).

In the meantime, as data corresponding to addresses 0x80-0xBF, addresses 0x40-0x7F and addresses 0x00-0x3F is available in the upstream cache subsystem, a snoop-hit response and data corresponding to addresses 0x80-0xBF (operation i3), a snoop-hit response and data corresponding to addresses 0x40-0x7F (operation j3) and a snoop-hit response and data corresponding to addresses 0x00-0x3F (operation k3) will be returned to the coherence hub 110, where data is returned directly from the upstream cache subsystem.

Although the downstream cache subsystem receives the entire 256-byte read data from the downstream memory subsystem, it returns only data chuck corresponding to addresses 0xC0-0xFF (operation m3) since only data corresponding to addresses 0xCF-0xFF results in a snoop miss.

Finally, the coherence hub 110, having collected all the requested data from four data chunks (i.e., three from the upstream cache subsystem due to snoop hits and one from the downstream memory subsystem due to snoop miss), assembles and returns the entire 256-byte data block corresponding to addresses 0x00-0xFF to the request initiator, completing the process (operation n3).

Since the write/read command may have specific attributes, for example, allocation attribute (e.g., Read-allocate or Write-allocate), non-allocation attribute (e.g., Read-no-allocate or Write-non-allocate), non-cacheable attribute. The following descriptions explain how the downstream cache subsystem deals with various attributes.

For any command with non-cacheable attribute, the sequential hint within corresponding sub-commands is ignored by the downstream cache subsystem. The read/write command with non-cacheable attribute is treated as a simple demand access only, and the read-prefetch/read-refill and write-merging operations as mentioned above will not be performed by the downstream cache subsystem.

For any read command with allocation attribute (e.g., Read-Allocate), the sequential hint within corresponding sub-commands is considered and processed by the downstream cache subsystem. The read command with allocation attribute is treated as a long-burst request upon arrival at the downstream cache subsystem. The downstream cache subsystem would prefetch all data corresponding to a full address range indicated by the sequential hint and allocates the retrieved data into the downstream cache subsystem.

For any read command with non-allocation attribute, the sequential hint within corresponding read sub-commands allows the downstream cache subsystem to override their non-allocation attributes. Due to sequential hint, the read sub-commands with non-allocation attributes will be forced to be treated as read sub-commands with allocation attributes by the downstream cache subsystem. However, corresponding allocated cache lines within the downstream cache subsystem is marked with a low-priority attribute, indicating they should be among the first to be evicted (Evict-first). This allows the downstream cache system to perform the read-prefetch operation without wasting the downstream cache memory with data that was not intended to be stored long-term.

For any write command with allocation attribute, no extra special handling is performed the downstream cache subsystem for its sequential hint.

For any write command with non-allocation attribute, the sequential hint within corresponding read sub-commands allows the downstream cache subsystem to override their non-allocation attributes. Similar to handling the write command with non-allocation attribute, the sequential hint within the write sub-commands with non-allocation attributes allows the downstream cache subsystem to override their non-allocation attributes and accordingly perform the write-merging operation for the write sub-commands. Also, corresponding allocated cache lines within the downstream cache subsystem is marked with a low-priority attribute, indicating they should be among the first to be evicted (Evict-first). In some embodiments, an additional non-discardable attribute may be applied to the allocated cache line. This non-discardable attribute ensures that the data, once allocated in the cache for merging purposes, will not be discarded before it is successfully written back to the downstream memory subsystem. This guarantees data integrity for the write-merging operation.

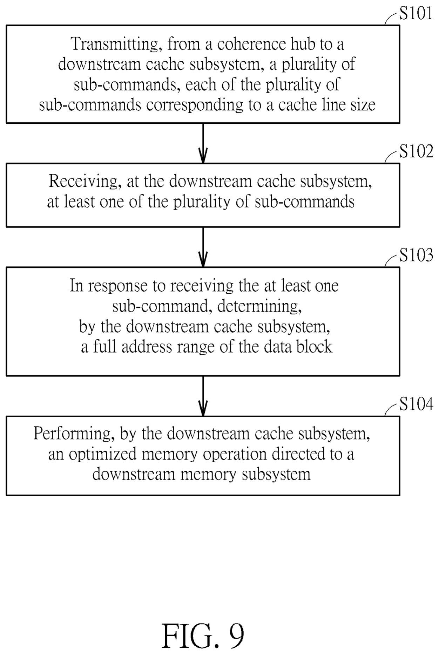

FIG. 9 illustrates a simplified flow chart of a method processing memory commands in a computing system according to one embodiment of the present invention. As shown in the figure, the method includes the following steps:
- S101:: transmitting, from a coherence hub to a downstream cache subsystem, a plurality of sub-commands, each of the plurality of sub-commands corresponding to a cache line size;
- S102:: receiving, at the downstream cache subsystem, at least one of the plurality of sub-commands;
- S103:: in response to receiving the at least one sub-command, determining, by the downstream cache subsystem, a full address range of the data block; and
- S104:: performing, by the downstream cache subsystem, an optimized memory operation directed to a downstream memory subsystem.
Since the principle and specific details of the foregoing steps have been described expressly in the above embodiments, further descriptions will not be repeated here. It should be noted that the above flow may achieve better performance of the memory and cache subsystem by adding other extra steps or making appropriate modifications and/or adjustments.

In conclusion, the present invention provides a novel and efficient method and system for enhancing memory performance in coherent computing architectures. By introducing a sequential hint mechanism, the disclosed embodiments effectively overcome the system memory efficiency losses that are inherent in prior art systems where long burst commands are split for coherency checks. The present invention restores the lost context of original memory access intents, enabling a downstream cache subsystem to perform optimized memory operations, such as read-prefetch and write-merging. The described mechanisms are robust and flexible, accommodating various command types, including those with non-allocation attributes, and supporting scenarios where the sequential hint is generated by either a coherence hub or directly by a request initiator. The result is a significant improvement in the utilization of memory bandwidth, a reduction in access latency, and an overall enhancement of system performance, particularly for data-intensive workloads generated by modem processors like GPUs and NPUs.

Embodiments in accordance with the present embodiments can be implemented as an apparatus, method, or computer program product. Accordingly, the present embodiments may take the form of an entirely hardware embodiment, an entirely software embodiment, or an embodiment combining software and hardware aspects that can all generally be referred to herein as a "module" or "system." Furthermore, the present embodiments may take the form of a computer program product embodied in any tangible medium of expression having computer-usable program code embodied in the medium. In terms of hardware, the present invention can be accomplished by applying any of the following technologies or related combinations: an individual operation logic with logic gates capable of performing logic functions according to data signals, and an application specific integrated circuit (ASIC), a programmable gate array (PGA) or a field programmable gate array (FPGA) with a suitable combinational logic.

The flowchart and block diagrams in the flow diagrams illustrate the architecture, functionality, and operation of possible implementations of systems, methods, and computer program products according to various embodiments of the present embodiments. In this regard, each block in the flowchart or block diagrams may represent a module, segment, or portion of code, which comprises one or more executable instructions for implementing the specified logical function(s). It is also noted that each block of the block diagrams and/or flowchart illustrations, and combinations of blocks in the block diagrams and/or flowchart illustrations, can be implemented by special purpose hardware-based systems that perform the specified functions or acts, or combinations of special purpose hardware and computer instructions. These computer program instructions can be stored in a computer-readable medium that directs a computer or other programmable data processing apparatus to function in a particular manner, such that the instructions stored in the computer-readable medium produce an article of manufacture including instruction means which implement the function/act specified in the flowchart and/or block diagram block or blocks.

## Claims

1. A method for processing memory commands in a computing system (100), **characterized in that** the method comprises:
transmitting, from a coherence hub (110) to a downstream cache subsystem (130), a plurality of sub-commands, each of the plurality of sub-commands corresponding to a cache line size;
receiving, at the downstream cache subsystem (130), at least one of the plurality of sub-commands;
in response to receiving the at least one sub-command, determining, by the downstream cache subsystem (130), a full address range of the data block; and
performing, by the downstream cache subsystem (130), an optimized memory operation directed to a downstream memory subsystem (140).

2. A computing system (100), **characterized by**:
a coherence hub (110), configured to transmit a plurality of sub-commands, each of the plurality of sub-commands corresponding to a cache line size; and
a downstream cache subsystem (130), configured to receive at least one of the plurality of sub-commands and in response to receiving the at least one sub-command, determine a full address range of the data block, and perform an optimized memory operation directed to a downstream memory subsystem (140).

3. The method according to claim 1 or the computing system (100) according to claim 2, **characterized in that** each of the plurality of sub-commands includes a target address and a sequential hint, and the sequential hint is indicative of a size of a data block regarding a corresponding original memory access command the sub-commands corresponds to.

4. The method according to claim 3 or the computing system (100) according to claim 3, **characterized in that** the downstream cache subsystem (130) determines the full address range of the data block based on the sequential hint and the target address of the at least one sub-command.

5. The method according to claim 3 or the computing system (100) according to claim 3, **characterized in that** one or more bits of the sequential hint are determined based on a size and a start address of the data block relative to a predefined aligned data block.

6. The method according to claim 3 or the computing system (100) according to claim 3, **characterized in that** the coherence hub (110): receives the original memory access command from a request initiator (150, 160, 170); splits the original memory access command into the plurality of sub-commands; generates the sequential hint; and attaches the sequential hint to each of the plurality of sub-commands.

7. The method according to claim 3 or the computing system (100) according to claim 3, **characterized in that** a request initiator (150, 160, 170) generates the plurality of sub-commands, generates the sequential hint, and attaches the sequential hint to each of the plurality of sub-commands; and the coherence hub (110) receives the plurality of sub-commands from the request initiator (150, 160, 170) prior to the transmitting.

8. The method according to claim 1 or the computing system (100) according to claim 2, **characterized in that** the optimized memory operation corresponds to the full address range of the data block.

9. The method according to claim 1 or the computing system (100) according to claim 2, **characterized in that** the original memory access command is a read command and the optimized memory operation is a read-prefetch operation; and the downstream cache subsystem (130) proactively reads the full address range of the data block from the downstream memory subsystem (140), including portions of the data block corresponding to sub-commands not yet received by the downstream cache subsystem (130).

10. The method according to claim 9 or the computing system (100) according to claim 9, **characterized in that** the original memory access command has a non-allocation attribute; and the downstream cache subsystem (130) treats the plurality of sub-commands as having an allocation attribute and allocates a cache line for data corresponding to each of the sub-commands.

11. The method according to claim 10 or the computing system (100) according to claim 10, **characterized in that** the downstream cache subsystem (130) associates the allocated cache line with a low-priority attribute, indicating the cache line is a candidate for early eviction.

12. The method according to claim 1 or the computing system (100) according to claim 2, **characterized in that** the original memory access command is a write command and the optimized memory operation is a write-merging operation; and the downstream cache subsystem (130) accumulates data from two or more of the plurality of sub-commands and performs a single write operation to the downstream memory subsystem (140) to write the accumulated data.

13. The method according to claim 12 or the computing system (100) according to claim 12, **characterized in that** the original memory access command has a non-allocation attribute; and the downstream cache subsystem (130) treats the plurality of sub-commands as having an allocation attribute and allocates a cache line for data corresponding to each of the sub-commands to accumulate data from the sub-commands.

14. The method according to claim 13 or the computing system (100) according to claim 13, **characterized in that** the downstream cache subsystem (130) associates the allocated cache line with a low-priority attribute, indicating the cache line is a candidate for early eviction, and associates the allocated cache line with a non-discardable attribute to ensure the accumulated data is written to the downstream memory subsystem (140).

15. The method according to claim 1 or the computing system (100) according to claim 2, **characterized in that:** prior to the transmitting, the coherence hub (110) performs a coherency check for each of the plurality of sub-commands against a snoop filter (120) to determine whether payload data in the sub-command is available in an upstream cache subsystem (104); and the coherence hub (110) transmits the sub-command to the downstream cache subsystem (130) in response to a snoop miss response from the coherency check for that sub-command.
